# EUROPÄISCHE PATENTSCHRIFT

(11) **EP 1 238 186 B1**
(45) Veröffentlichungstag und Bekanntmachung des Hinweises auf die Patenterteilung: **08.12.2004**
(21) Anmeldenummer: 00975811.1
(22) Anmeldetag: 29.09.2000
(51) Int. Cl.: F01N 3/20, B01D 53/94, F01N 3/08

(54) **VORRICHTUNG ZUM NACHBEHANDELN VON ABGASEN EINER BRENNKRAFTMASCHINE**
DEVICE FOR SUBSEQUENTLY TREATING EXHAUST GASES OF AN INTERNAL COMBUSTION ENGINE
DISPOSITIF POUR LE RETRAITEMENT DE GAZ D'ECHAPPEMENT D'UN MOTEUR A COMBUSTION INTERNE

(30) Priorität: 30.09.1999 DE 19946902
(43) Veröffentlichungstag der Anmeldung: 11.09.2002
(73) Patentinhaber: ROBERT BOSCH GMBH, 70442 Stuttgart (DE)
(72) Erfinder: FRISCH, Walter, 71254 Hirschlanden (DE); HUBER, Sven, 83404 Ainring-Mitterfelden (DE); KRAH, Jürgen, A-5101 Bergheim (AT); MAYER, Hanspeter, A-5421 Adnet (AT); OFFENHUBER, Michael, A-5421 Adnet (AT); SACHSENHOFER, Robert, A-5411 Oberalm (AT); WEISS, Roland, A-5424 Vigaun (AT); FOETSCHL, Markus, A-5580 Unternberg (AT); SCHWARZ, Roland, A-5020 Salzburg (AT); HOEPFLINGER, Gerald, A-5412 Puch (AT)
(86) Internationale Anmeldenummer: PCT/DE2000/003405
(87) Internationale Veröffentlichungsnummer: WO 2001/023715

(56) Entgegenhaltungen:
- WO-A-96/36797
- DE-A- 19 750 138
- US-A- 4 403 473

## Beschreibung

Die vorliegende Erfindung betrifft eine Vorrichtung zum Nachbehandeln von Abgasen einer Brennkraftmaschine unter Verwendung eines in die Abgase einzubringenden. Reduktionsmittels, insbesondere Harnstoff bzw. Harnstoff-Wasser-Lösung, nach dem Oberbegriff des Patentanspruchs 1.

Als Folge der in den letzten Jahren stets niedriger anzusetzenden Schadstoffgrenzwerte sind zahlreiche Vorrichtungen und Verfahren zur Nachbehandlung von Abgasen in Brennkraftmaschinen entwickelt worden. Beispielsweise mittels Katalysatorsystemen, welche Harnstoff und/oder Ammoniak als Reduktionsmittel zur NOₓ-Konvertierung verwenden, sind effiziente Abgasnachbehandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt, die üblicherweise in sogenannte SCR-Katalysatoren (engl. Selective Catalytic Reduction) mit Harnstoffdosiersystem und Speicherkatalysatoren unterteilt werden. Die sogenannten SCR-Katalysatoren werden mittels einer Harnstoff- und/oder Ammoniakreduktionsmittelzufuhr generiert, während die sogenannten Speicherkatalysatoren mit Kohlenwasserstoffen des mitgeführten Brennkraftmaschinen-Brennstoffs in sogenannten Abgasfettphasen regeneriert werden.

Aus der EP-A-0381236 ist ein System bekannt, welches zum Entfernen von Stickoxiden in Abgasen aus einem Dieselmotor Ammoniak als Reduktionsmittel zudosiert. Bei diesem System ist ferner ein Turbolader vorgesehen, welcher den Druck des Abgases senkt. Eine verwendete Harnstoff-Wasser-Lösung wird mittels Druckluft zudosiert.

Aus der DE-A-44 41 261 ist eine Einrichtung zum Nachbehandeln der Abgase einer Brennkraftmaschine bekannt, bei welcher die Leistung des Katalysators über eine Dosiereinrichtung verbessert werden soll. Die Dosiereinrichtung ist als Kleinstmengendosier-Verdrängerpumpe. ausgebildet, die auf einem zylindrischen Rotationskörper einen Gewindegang in der Form einer Nut aufweist, wobei zur Änderung der Förderungsleistung der Rotationskörper mit variabler Drehzahl angetrieben wird. Die Zugabe des Reduktionsmittels in das Abgassystem erfolgt vorzugsweise kennfeldabhängig, das heißt in Abhängigkeit von Menge und/oder Zusammensetzung des Abgases.

Die DE 197 50 138 beschreibt ein Harnstoff-Dosiersystem mit einer Druckluftzufuhr zur Zerstäubung, bei dem im hierfür vorgesehenen Druckluftpfad ein Rückschlagventil vorgesehen ist.

Es ist beispielsweise aus der DE 42 30 056 A1 bekannt, ein Aerosol auf der Grundlage eines Reduktionsmittels und dieses beaufschlagender Druckluft in einer Mischkammer zu erzeugen. Hierbei werden das Reduktionsmittel und die Luft über getrennte Leitungen der Mischkammer zugeführt. Während eines Dosiervorgangs kann es in der Mischkammer zu Druckschwankungen und Verwirbelungen kommen, die zu einem Rückströmen von Reduktionsmittel, beispielsweise wäßriger Harnstofflösung, in die Druckluftleitung führen können. Da beispielsweise bei Kraftfahrzeugen die verwendete Druckluft aus einem Druckluft-Bordnetz entnommen wird, kann es bei einem derartigen Reduktionsmittel-Rückschlag in die Druckluftleitung zu einer Kontaminierung des gesamten Druckluft-Bordnetzes kommen. Dies kann, beispielsweise aufgrund einer korrosiv wirkenden Harnstoff-Wasser-Lösung, zu Beeinträchtigungen eines Druckluft-Bremssystems führen.

Aufgabe der Erfindung ist die Verbesserung einer gattungsmäßigen Vorrichtung zum Nachbehandeln von Abgasen dahingehend, dass eine Kontamination der Luftzufuhrleitung beziehungsweise eines hiermit kommunizierenden Druckluft-Bordnetzes in kompakter Bauweise sicher vermieden werden kann.

Diese Aufgabe wird gelöst, durch eine Vorrichtung mit den Merkmalen der unabhängigen Ansprüche.

Durch die erfindungsgemäße Maßnahme, Mittel zur Vermeidung eines Rückstromes von Luft oder Reduktionsmittel-Luft-Gemisch aus der Mischkammer in die Druckluftleitung vorzusehen, kann eine Kontamination der Druckluftleitung beziehungsweise des Druckluft-Bordnetzes wirksam vermieden werden. Es ist hierdurch beispielsweise möglich, die Luft in der Druckluft mit einem gegenüber herkömmlichen Lösungen relativ geringen Druck zu beaufschlagen.

Dabei sind die Mittel zur Vermeidung eines Rückstromes als in der Mischkammer angeordnetes Rückschlagventil ausgebildet. Mittels eines derartigen, in die Mischkammer integrierten Rückschlagventils ist eine besonders kompakte Bauweise der erfindungsgemäßen Vorrichtung möglich, insbesondere unter Einsatz eines klein bauenden elastischen Körpers wie eines elastischen Schlauchs oder eines Elastomerventilkörpers.

Vorteilhafte Ausgestaltungen der erfindungsgemäßen Vorrichtung beziehungsweise der erfindungsgemäßen Mischkammer sind Gegenstand der Unteransprüche.

Zweckmäßigerweise weist das in der Mischkammer angeordnete Rückschlagventil einen auf einen Ventilkörper aufgesteckten elastischen Schlauch auf, wobei der Schlauch je nach Richtung der Druckbeaufschlagung des Ventils dichtend oder durchlässig ist. Ein derartiges Rückschlagventil, dessen Schlauch beispielsweise aus einem Silikonwerkstoff bestehen kann, baut sehr klein und ist leicht austauschbar.

Gemäß einer weiteren bevorzugten Ausführungsform der erfindungsgemäßen Vorrichtung weist das Rückschlagventil einen Elastomerventilkörper auf, der mit einer Dichtlippe luftdicht an einer Innenwand des Ventilgehäuses oder der Druckluftleitung anliegt. Auch ein derartiges Rückschlagventil baut sehr klein, ist preiswert verfügbar und erweist sich in der Praxis als robust und zuverlässig.

Gemäß einer bevorzugten Ausführungsform der erfindungsgemäßen Mischkammer weist das Rückschlagventil einen auf einen Ventilkörper aufgesteckten elastischen Schlauch auf, wobei der Schlauch bei Druckbeaufschlagung mittels Druckluft in der Druckluftzufuhrrichtung ein Durchtreten von Druckluft von der Druckluftleitung in den Mischraum gestattet, und bei entgegengesetzter Druckbeaufschlagung durch Reduktionsmittel-Luft-Gemisch in dem Mischraum einen Durchtritt dieses Gemisches in die Druckluftleitung verhindert.

Bevorzugte Ausgestaltungen der erfindungsgemäßen Vorrichtung beziehungsweise der erfindungsgemäßen Mischkammer werden nun anhand der beigefügten Zeichnung näher beschrieben. In dieser zeigt
- Figur 1: eine blockschaltbildartige Ansicht,
- Figur 2: eine bevorzugte Ausführungsform der erfindungsgemäßen Mischkammer in seitlicher Schnittansicht, und
- Figur 3: eine weitere bevorzugte Ausführungsform eines erfindungsgemäß einsetzbaren Rückschlagventils in seitlicher sowie perspektivischer Ansicht.

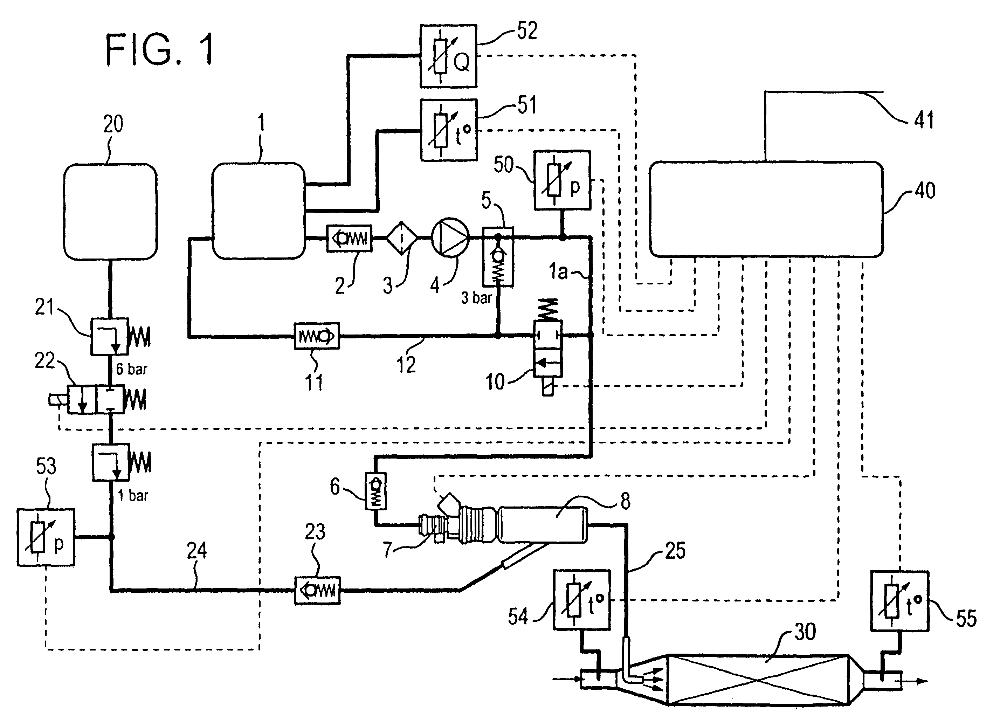

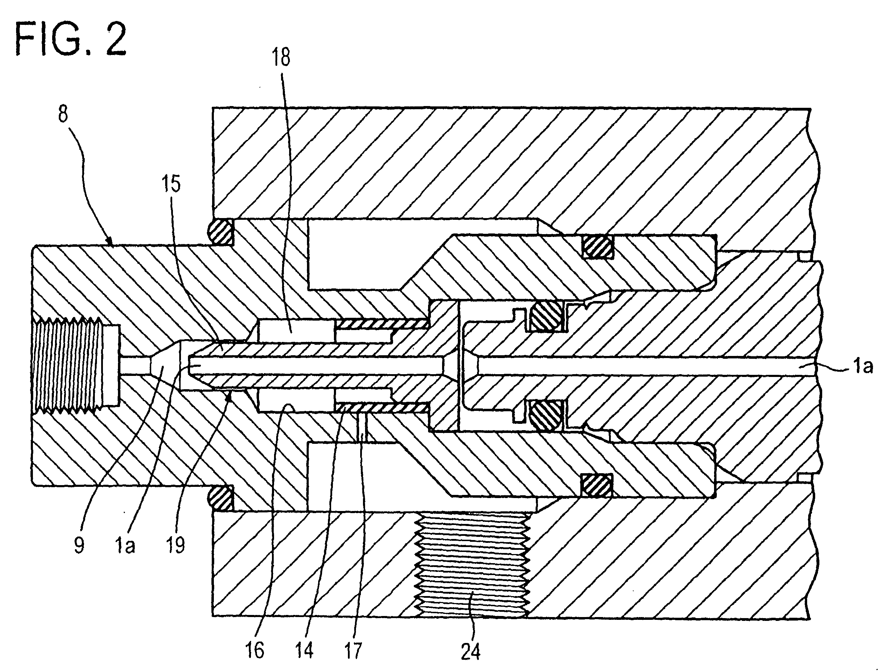

In Figur 1 ist mit 1 ein Harnstofftank bezeichnet, aus welchem eine Harnstoff-Wasser-Lösung über eine Leitung 1a mit einem Rückschlagventil 2 und einem als Filtersieb ausgeführten Filter 3 von einer Förderpumpe 4 angesaugt und über ein weiteres Rückschlagventil 6 zu einem Dosierventil 7 einer Mischkammer 8 gefördert wird. Das Dosierventil 7 dosiert die erforderliche Menge an Harnstoff-Wasser-Lösung in einen Mischraum, welcher in Figur 2 mit 9 bezeichnet ist. Eine eventuell auftretende Überströmmenge der Harnstoff-Wasser-Lösung ist über einen Druckregler 5 und ein weiteres Rückschlagventil 11 durch eine Rücklaufleitung 12 in den Harnstofftank 1 zurückführbar. Eine eventuell notwendige Entlüftung der Leitung 1a ist über einen Entlüftungskreislauf mit einem Entlüftungsventil 10 durchführbar.

Mit 20 ist ferner ein Druckluftbehälter bezeichnet, aus welchem Druckluft über einen Druckbegrenier 21, ein 2/2-Wegeventil 22 und ein Rückschlagventil 23 in die Mischkammer einbringbar ist. Durch Vorsehen des Rückschlagventils 23, welches beispielsweise als Kugelventil oder Flachsitzventil ausgebildet sein kann, kann ein Rückströmen eines Reduktionsmittel-Luft-Gemisches aus der Mischkammer in die Druckluftleitung 24 hinaus verhindert werden. Hierdurch ist die Gefahr einer Kontamination eines mit der Druckluftleitung 24 kommunizierenden Druckluft-Bordnetzes gegenüber herkömmlichen Systemen stark reduziert. Derartige Rückschlagventile, welche beispielsweise als Kugelventile oder Flachsitzventile ausgebildet sein können, sind sehr preiswert verfügbar beziehungsweise einsetzbar, und erweisen sich in der Praxis als robust und zuverlässig.

In der Mischkammer 8 wird unter Beaufschlagung der Harnstoff-Wasser-Lösung mittels der Druckluft ein Aerosol erzeugt, welches über eine Aerosolleitung 25 in einen Katalysator 30 eingebracht wird. Ein Steuergerät 40 erfaßt hierbei Signale, die von einem übergeordneten Motorsteuergerät über eine CAN-Datenleitung 41 empfangen werden, sowie die Signale von Druck-, Temperatur- bzw. Füllstandssensoren 50 bis 55, deren Funktionsweise an sich bekannt ist und hier nicht weiter erläutert wird. Das Steuergerät 40 berechnet aus diesen Informationen eine Harnstoff-Dosiermenge, welche einem den Katalysator 30 durchströmenden Abgas zugegeben werden soll.

Das Steuergerät 40 regelt mit Hilfe der beschriebenen Magnetventile den Druck in der Druckluftleitung 24, und überwacht ferner den Harnstoff-Wasser-Lösungsdruck. Das Steuergerät 40 erkennt Abweichungen und Fehler, speichert diese und bringt sie durch ein (nicht gezeigtes) Diagnosegerät, beispielsweise an einem PC, zur Anzeige.

Unter Bezugnahme auf Fig. 2 wird nun eine bevorzugte Ausführungsform der erfindungsgemäßen Mischkammer, wie sie im Rahmen der erfindungsgemäßen Vorrichtung einsetzbar ist, beschrieben. Wesentlich bei dieser Mischkammer 8 ist, daß das Rückschlagventil aus einem Silikonschlauch 14 bzw. aus einem Schlauch aus einem ähnlichen elastischen Werkstoff besteht, der auf einen Ventilkörper 15 aufgesteckt ist und an der Innenwand 16 der Mischkammer 8 dicht anliegt. Strömt aus der Druckluftleitung 24 Druckluft in die Düsenbohrung 17 (es können über den Umfang verteilt mehrere derartiger Düsenbohrungen vorgesehen sein), so wird der Silikonschlauch 14 von der Mischkammerinnenwand 16 abgedrückt und die Luft kann in einen Diffusor 18 einströmen und weiter über einen Ringspalt 19 in den Mischraum 9 gelangen. In dem Mischraum 9 vermischt sich die Luft mit der aus der Harnstoffleitung 1a ausströmenden wäßrigen Harnstofflösung.

Entsteht bei instationärem Betrieb oder aufgrund von Turbulenzen eine Gemischrückströmung aus dem Mischraum 9 in den Diffusor 18, so wird der Silikonschlauch 14' dicht an die Innenwand 16 der Mischkammer gedrückt und verhindert das weitere Rückströmen des Gemisches in die Druckluftleitung 24.

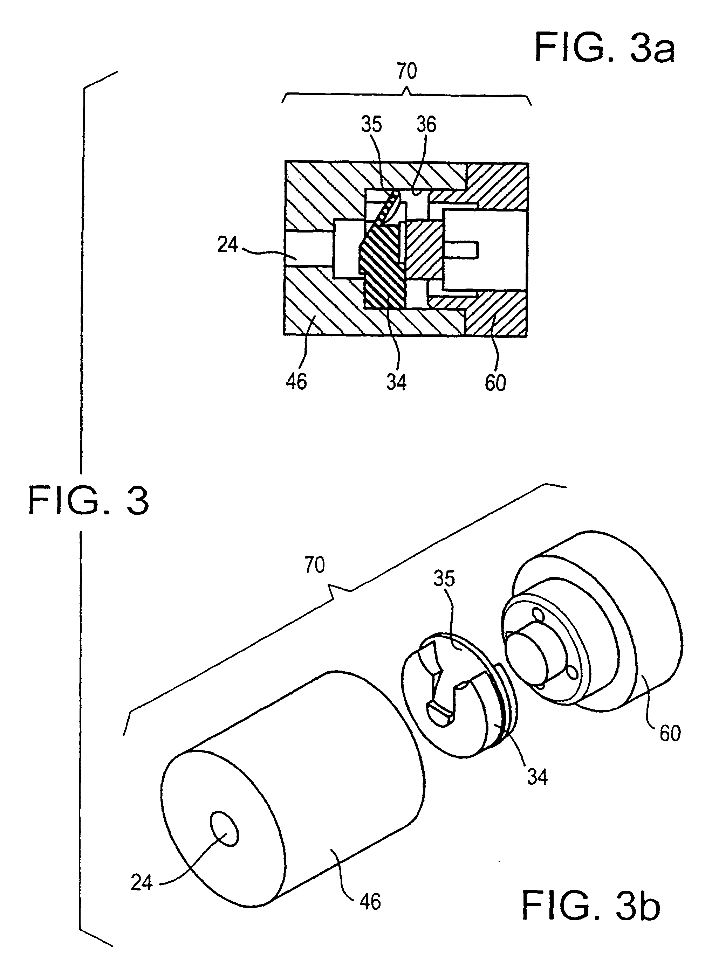

Eine weitere bevorzugte Ausführungsform eines bei der erfindungsgemäßen Vorrichtung beziehungsweise der erfindungsgemäßen Mischkammer einsetzbaren Rückschlagventils wird nun unter Bezugnahme auf die Figur 3 beschrieben. Hierbei zeigt Figur 3a eine geschnittene Ansicht, und Figur 3b eine perspektivische explodierte Ansicht des Rückschlagventils. Kernstück des in der Figur 3 dargestellten Rückschlagventils ist ein Elastomerventilkörper 34, der mit einer Dichtlippe 35 luftdicht an der Innenwand 36 eines Ventilgehäuses 46 anliegt. Es ist ebenfalls möglich, dass die Dichtlippe 35 unmittelbar an der Innenwandung der Druckluftleitung, wie sie unter Bezugnahme auf Figur 1 beschrieben wurde, anliegt. Bei einströmender Luft aus der Luftleitung 24 öffnet das Ventil; bei rückströmender Luft schließt das Ventil.

Für eine universelle Anwendung ist das Ventil bevorzugt als Ventilpatrone 70 ausgeführt, welche aus dem Ventilkörper 34, dem Ventilgehäuse 46 und einem Ventildeckel 60 besteht.

## Patentansprüche

1. Vorrichtung zum Nachbehandeln von Abgasen einer Brennkraftmaschine unter Verwendung eines in die Abgase einzubringenden Reduktionsmittels, insbesondere eines Harnstoffs beziehungsweise einer Harnstoff-Wasser-Lösung, mit einer Mischkammer (8), in welche in einem Reduktionsmittelspeicher (1) gespeichertes Reduktionsmittel über eine Reduktionsmittelleitung (1a), und in einem Druckluftspeicher (20) enthaltene Druckluft über eine Druckluftleitung (24) zur Erzeugung. eines Reduktionsmitel-Luft-Gemischs einbringbar sind, wobei zur Verhinderung eines Rückstroms von Reduktionsmittel oder Reduktionsmittel-Luft-Gemisch aus der Mischkammer (8) in die Druckluftleitung (24) ein Rückschlagventil vorgesehen ist, **dadurch gekennzeichnet, dass** das Rückschlagventil (14, 15; 70) in der Mischkammer (8) angeordnet.ist und einen elastischen Körper (34, 14) aufweist, wobei der elastische Körper bei Druckbeaufschlagung in der Druckluft-Zufuhr-Einrichtung ein Durchtreten von Druckluft von der Druckluftleitung-in einen Mischraum der Mischkammer gestattet und bei entgegengesetzter Druckbeaufschlagung den Rückstrom verhindert.

2. Vorrichtung nach Anspruch 1, **dadurch gekennzeichnet, dass** der elastische Körper ein elastischer Schlauch (14) ist.

3. Vorrichtung nach Anspruch 1, **dadurch gekennzeichnet, dass** der elastische Körper ein Elastomer-Ventilkörper (34) ist und dass der Elastomer-Ventilkörper eine Dichtlippe (35) aufweist, wobei die Dichtlippe luftdicht an einer Innenwand eines Ventilgehäuses (46) oder der Druckluftleitung (24) anliegt.

4. Mischkammer zum Erzeugen eines Reduktionsmittel-Luft-Gemisches, insbesondere eines Aerosols, zum Nachbehandeln von Abgasen einer Brennkraftmaschine, mit einem Mischraum (9), in welchem Reduktionsmittel über eine Reduktionsmittelleitüng (1a) und Druckluft über eine Druckluftleitung (24) einbringbar sind, **dadurch gekennzeichnet, dass** die Mischkammer zur Verhinderung eines Rückstroms von Reduktionsmittel oder Reduktionsmittel-Luft-Gemisch aus der Mischkammer in die Druckluftleitung ein Rückschlagventil (14, 15; 70) und das Rückschlagventil einen elastischen Körper (14, 34) aufweist, wobei der elastische Körper bei Druckbeaufschlagung in der Druckluft-Zufuhr-Einrichtung ein Durchtreten von Druckluft von der Druckluftleitung in einen Mischraum der Mischkammer gestattet und bei entgegengesetzter Druckbeaufschlagung den Rückstrom verhindert.

5. Mischkammer nach Anspruch 4, **dadurch gekennzeichnet, dass** der elastische Körper ein elastischer Schlauch (14) ist.

6. Mischkammer nach.Anspruch 4, **dadurch gekennzeichnet, dass** der elastische Körper ein Elastomerventilkörper (34) ist und dass der Elastormerventilkörper eine Dichtlippe (35) aufweist, wobei die Dichtlippe luftdicht an einer Innenwand eines ventilgehäuses (46) oder der Druckluftleitung (24) anliegt.

## Claims

1. Apparatus for the aftertreatment of exhaust gases from an internal combustion engine using a reducing agent, in particular a urea or a urea-water solution, which can be introduced into the exhaust gases, having a mixing chamber (8), into which reducing agent, which is stored in a reducing agent tank (1), can be introduced via a reducing-agent line (1a) and into which compressed air, contained in a compressed-air tank (20), can be introduced via a compressed-air line (24) in order to produce a reducing agent/air mixture, a nonreturn valve being provided in order to prevent reducing agent or reducing agent/air mixture from flowing back out of the mixing chamber (8) into the compressed-air line (24), **characterized in that** the nonreturn valve (14, 15; 70) is arranged in the mixing chamber (8) and has an elastic body (34, 14), the elastic body, when pressure is applied in the compressed air-feed device, allowing compressed air to pass through from the compressed-air line into a mixing space of the mixing chamber but preventing it from flowing back in the event of pressure being applied in the opposite direction.

2. Apparatus according to Claim 1, **characterized in that** the elastic body is an elastic hose (14).

3. Apparatus according to Claim 1, **characterized in that** the elastic body is an elastomer valve body (34), and **in that** the elastomer valve body has a sealing lip (35), the sealing lip bearing in an airtight manner against an inner wall of a valve housing (46) or the compressed-air line (24).

4. Mixing chamber for producing a reducing agent/air mixture, in particular an aerosol, for the aftertreatment of exhaust gases from an internal combustion engine, having a mixing space (9), into which reducing agent can be introduced via a reducing-agent line (1a) and compressed air can be introduced via a compressed-air line (24), **characterized in that** the mixing chamber has a nonreturn valve (14, 15; 70) for preventing reducing agent or reducing agent/air mixture from flowing back out of the mixing chamber into the compressed-air line, and the nonreturn valve has an elastic body (14, 34), the elastic body, when pressure is applied in the compressed-air feed device, allowing compressed air to pass through from the compressed-air line into a mixing space of the mixing chamber but preventing it from flowing back in the event of pressure being applied in the opposite direction.

5. Mixing chamber according to Claim 4, **characterized in that** the elastic body is an elastic hose (14).

6. Mixing chamber according to Claim 4, **characterized in that** the elastic body is an elastomer valve body (34), and **in that** the elastomer valve body has a sealing lip (35), the sealing lip bearing in an airtight manner against an inner wall of a valve housing (46) or the compressed-air line (24).

## Revendications

1. Dispositif pour le post-traitement de gaz d'échappement d'un moteur à combustion interne avec utilisation d'un agent réducteur, en particulier d'urée ou d'une solution urée-eau, à introduire dans les gaz d'échappement, comprenant une chambre de mélange (8), dans laquelle de l'agent réducteur accumulé dans un réservoir d'agent réducteur (1) peut être introduit au moyen d'une conduite d'agent réducteur (1a) et de l'air comprimé contenu dans un réservoir d'air comprimé (20) peut être introduit au moyen d'une conduite d'air comprimé (24) pour produire un mélange agent réducteur-air, un clapet anti-retour étant prévu pour empêcher un reflux d'agent réducteur ou de mélange agent réducteur-air de la chambre de mélange (8) dans la conduite d'air comprimé (24),
**caractérisé en ce que**
le clapet anti-retour (14, 15 ; 70) est disposé dans la chambre de mélange (8) et présente un corps élastique (34, 14), le corps élastique permettant un écoulement d'air comprimé de la conduite d'air comprimé dans un espace de mélange de la chambre de mélange en présence d'une sollicitation de pression dans le dispositif d'amenée d'air comprimé, et empêchant le reflux en présence d'une sollicitation de pression inverse.

2. Dispositif selon la revendication 1,
**caractérisé en ce que**
le corps élastique est un tuyau élastique.

3. Dispositif selon la revendication 1,
**caractérisé en ce que**
le corps élastique est un corps de soupape en élastomère (34) et le corps de soupape en élastomère présente une lèvre d'étanchéité (35), la lèvre d'étanchéité étant appuyée à joint étanche à l'air contre une paroi intérieure d'un boîtier de soupape (46) ou de la conduite d'air comprimé (24).

4. Chambre de mélange pour la production d'un mélange agent réducteur-air, en particulier d'un aérosol, pour le post-traitement de gaz d'échappement d'un moteur à combustion interne, comprenant un espace de mélange (9) dans lequel un agent réducteur peut être introduit au moyen d'une conduite d'agent réducteur (1a) et de l'air comprimé peut être introduit au moyen d'une conduite d'air comprimé (24),
**caractérisée en ce que**
pour empêcher un reflux d'agent réducteur ou de mélange agent réducteur-air de la chambre de mélange dans la conduite d'air comprimé, la chambre de mélange présente un clapet anti-retour (14, 15 ; 70) et le clapet anti-retour présente un corps élastique (14, 34), le corps élastique permettant un passage d'air comprimé de la conduite d'air comprimé dans un espace de mélange de la chambre de mélange en présence d'une sollicitation de pression dans le dispositif d'amenée d'air comprimé et empêchant le reflux en présence d'une sollicitation de pression en sens inverse.

5. Chambre de mélange selon la revendication 4,
**caractérisée en ce que**
le corps élastique est un tuyau élastique (14).

6. Chambre de mélange selon la revendication 4,
**caractérisée en ce que**
le corps élastique est un corps de soupape en élastomère (34) et le corps de soupape en élastomère présente une lèvre d'étanchéité (35), la lèvre d'étanchéité étant appuyée à joint étanche à l'air contre une paroi intérieure d'un boîtier de soupape (46) ou de la conduite d'air comprimé (24).
